# FASCICULE DE BREVET EUROPEEN

(11) **EP 2 834 795 B1**
(45) Date de publication et mention de la délivrance du brevet: **06.11.2019**
(21) Numéro de dépôt: 13719966.7
(22) Date de dépôt: 02.04.2013
(51) Int. Cl.: G06T 17/00

(54) **PROCÉDÉ ET DISPOSITIF DE TRAITEMENT D'INFORMATION**
VERFAHREN UND VORRICHTUNG ZUR INFORMATIONSVERARBEITUNG
METHOD AND DEVICE FOR PROCESSING INFORMATION

(30) Priorité: 05.04.2012 FR 1253154; 05.04.2012 FR 1253155; 05.04.2012 FR 1253156
(43) Date de publication de la demande: 11.02.2015
(73) Titulaire: Isotropix, 34000 Montpellier (FR)
(72) Inventeur: ASSADIAN, Sam, F-34000 Montpellier (FR); GUICHOU, Sébastien, F-34000 Montpellier (FR); COUDERC, Yann, F-56340 Plouharnel (FR)
(74) Mandataire: Cornuejols, Georges
(86) Numéro de dépôt international: PCT/FR2013/050722
(87) Numéro de publication internationale: WO 2013/150234

(56) Documents cités:
- US-A1- 2002 060 678
- "Open Inventor toolkit Tutorial: Chapter 3. Nodes and Groups and Chapter 4. Cameras and Lights", , 6 août 2004 (2004-08-06), XP055084570, Extrait de l'Internet: URL:http://www-evasion.imag.fr/Membres/Fra ncois.Faure/doc/inventorMentor/sgi_html/ch 03.html [extrait le 2013-10-18]
- Dongqiu Qian ET AL: "Collaborative Design with NetDraw", Proceedings of Computer Aided Architectural Design (CAAD) Futures '99, 1 janvier 1999 (1999-01-01), XP055052806, Extrait de l'Internet: URL:http://code.arc.cmu.edu/archive/dmgftp /public_html/publications/pdfs/caadfutures 99-netdraw.pdf [extrait le 2013-02-08]
- Claus Höfele: "3D graphics for Java mobile devices, Part 2: M3G's retained mode Easily manage 3D objects in scene graphs with JSR 184", , 20 décembre 2005 (2005-12-20), XP055084569, Extrait de l'Internet: URL:http://www-128.ibm.com/developerworks/ java/library/wi-mobile2/ [extrait le 2013-10-18]

## Description

### ARRIERE-PLAN DE L'INVENTION

### Domaine de l'invention

La présente invention concerne un procédé et un dispositif de traitement d'information. Elle s'applique, en particulier au traitement d'informations d'images et, notamment, à l'infographie.

### Arrière-plan technologique

L'infographie (aussi appelée improprement « image de synthèse ») est l'art de l'image numérique. Elle définit les graphismes créés et gérés par ordinateur, dont la gestion se base sur une station graphique, les outils d'acquisition comme le numériseur ou la caméra banc-titre, les outils de manipulation comme la souris ou la tablette graphique. Elle se compose également d'outils de stockage et d'outils de restitution, d'une interface utilisateur qui permet l'interaction entre l'utilisateur et l'ordinateur et du format de données qui assure l'intermédiaire entre l'image rendue et les éléments numériques de celle-ci.

L'infographiste (ou infographe) est une personne qui maîtrise le travail de l'image (2D, 3D, logiciels PAO, web, etc.). C'est un spécialiste de l'image et de l'informatique. Il utilise des logiciels spécifiques pour la mise en page, la retouche de photos et d'images, le dessin vectoriel, la création de site Internet, etc.

En infographie 2D, les images sont créées par des techniques travaillant directement sur les deux dimensions de l'image, que ce soit :
- en créant des formes ex nihilo (dessin, peinture, etc),
- par des processus algorithmiques divers (images fractales), ou
- par traitement d'images, c'est-à-dire modification des propriétés de chaque pixel d'une image d'origine (photographique ou dessinée, etc.). Ces modifications peuvent porter sur les dimensions des formes, leur luminance, leur couleur. Elles passent en particulier par un certain nombre de filtres (opérations mathématiques) dont les fondamentaux sont apparus avec Photoshop (marque déposée).

En infographie 3D, les images sont créées selon les principales étapes de création suivantes :
- la modélisation des objets de la scène en trois dimensions,
- la position et la trajectoire de la caméra et de la cible,
- le positionnement et le réglage des lumières,
- la création et l'affectation des textures,
- le choix du mode de rendu et
- le calcul des images.

La synthèse d'image 3D se décompose essentiellement en deux étapes :
- modéliser ce que l'on veut visualiser ou représenter. Cette étape est appelée « modélisation » et
- effectuer la visualisation de ce que l'on a modélisé. Cette étape est appelée « rendu ».

La modélisation consiste à faire stocker par l'ordinateur un ensemble de données géométriques et de caractéristiques graphiques permettant de représenter ensuite le modèle. Ce modèle est habituellement appelé scène 3D, d'après l'anglais scene qui signifie « vue », on dira donc « vue 3D ».

Le rendu est une phase qui consiste à transformer l'espace 3D en une image 2D. Le rendu est généré par un/des programme(s) qu'on appelle moteur de rendu 3D, intégré(s) ou non au logiciel de modélisation.

Le rendu se décompose en plusieurs phases :
- calcul de l'éclairage (on parle « d'illumination »)
- projection dans le plan d'observation et
- dessin à proprement parler avec application éventuelle de textures.

Des techniques complémentaires d'application de texture (« texture mapping ») sont utilisées pour le rendu d'effets plus réalistes sans pour autant rendre plus complexes les modèles 3D.

Actuellement, l'infographie 2D est intégrée ou interactive, en ce sens que l'infographiste peut visualiser l'image en cours de réalisation. Au contraire, les étapes successives nécessitant beaucoup de ressources du processus d'infographie 3D impose de ne pas visualiser, en temps réel, l'image en cours de réalisation.

Au cours de la gestion d'un projet, par exemple la réalisation d'une animation, l'infographiste génère des milliers d'objets et de fichiers. En effet, chaque objet de chaque image peut devoir être représenté par un objet spécifique. Il doit alors organiser ces objets pour les retrouver rapidement, notamment lorsqu'il doit les éditer. Le document "Open Inventor toolkit Tutorial: Chapter 3. Nodes and Groups and Chapter 4. Cameras and Lights" décrit une organisation de la scène à l'aide de graphes, dont le sens de parcours permet d'allouer les attributs aux objets dans la scène.

Plus les images de synthèse sont riches, plus les vues 3D qui les décrivent sont complexes car elles sont constituées d'un très grand nombre d'objets manipulés par l'utilisateur. Un logiciel de synthèse d'images peut gérer plusieurs images en parallèle et donc beaucoup plus d'objets que d'autres logiciels de 3D.

Il se pose donc le problème d'organiser, sélectionner et manipuler individuellement ou simultanément les milliers d'objets contenus dans les sessions du logiciel mettant en œuvre chacun des procédés objets de la présente invention.

On ne connaît aucun automatisme capable de l'aider dans cette tâche fastidieuse.

### BREVE DESCRIPTION DE L'INVENTION

La présente invention vise à remédier à ces inconvénients.

A cet effet, la présente invention vise, selon un premier aspect, un procédé d'organisation d'un système d'objets logiciels dotés d'attributs, qui comporte :
- une étape de formation d'une arborescence hiérarchique de groupes d'objets appelés « contextes », l'arborescence comportant un contexte racine dans lequel se trouve tous les autres contextes et tous les objets, chaque objet de ladite arborescence étant dans un dit contexte,
- une étape de formation, pour chacun d'une pluralité de contextes, d'un sous-contexte dit « global » pour exposer des objets à partir d'un point de l'arborescence de contextes, chaque sous-contexte global servant à exposer des objets globalement à partir d'un point d'arborescence à toute la sous-arborescence, tout objet qui est placé dans un contexte global étant rendu disponible à tous les objets du contexte où se trouve le contexte « global » considéré, dit contexte « père », et de tous les sous-contextes du contexte père.
- une étape de formation, pour chacun d'une pluralité de contextes, d'un répertoire dit « de contextualisation » de valeurs d'attributs pour les objets du dit contexte,
- une étape d'attribution, à au moins un attribut d'un objet de l'arborescence à afficher, de la valeur de l'attribut de même nom et de même type, de plus haut rang pour lequel il a été attribué une valeur dans un répertoire de contextualisation,
- une étape de détermination d'objets à afficher et
- une étape d'affichage de chaque objet à afficher, avec ses attributs et les valeurs de ses attributs, en tenant compte des répertoires de contextualisation, lorsqu'une valeur a été affectée à un attribut dans un répertoire de contextualisation d'un contexte ou un sous-contexte contenant ledit objet, la valeur de l'attribut compatible de l'objet édité prenant la valeur du répertoire de contextualisation du contexte de plus haut niveau pour lequel l'attribut a été doté d'une valeur, chaque contexte héritant automatiquement des valeurs d'attribut associées au contexte de plus haut niveau auquel ledit contexte appartient.

On note que les contextes globaux servent à exposer des objets globalement a partir d'un point d'arborescence à toute la sous-arborescence. Les contextes globaux permettent au système de définir une visibilité de « haut en bas » dans l'arborescence des contextes. Ainsi les contextes globaux des sous-contextes voient tous les objets qu'ils contiennent ainsi que tous les objets des contextes globaux depuis ce contexte jusqu'à la racine.

Grâce à ces dispositions, tous les objets et contextes présents dans un contexte doté d'un répertoire de contextualisation sont cohérents puisqu'ils ont des valeurs d'attribut communes. Ainsi, bien que chaque contexte soit autonome, il hérite automatiquement des valeurs d'attribut associées au contexte de plus haut niveau auquel ledit contexte appartient.

Dans des modes de réalisation, au cours de l'étape d'attribution, on attribue à chaque attribut d'un objet de l'arborescence à afficher, la valeur de l'attribut de même nom, de même type et de même modificateur, de plus haut rang pour lequel il a été attribué une valeur dans un répertoire de contextualisation.

En tenant compte du modificateur on améliore le fonctionnement du procédé.

Dans des modes de réalisation, l'étape d'affichage comporte l'affichage :
- des objets présents dans le contexte,
- des attributs des dits objets,
- des valeurs des dits attributs,
- des modificateurs des valeurs des dits attributs : modificateurs d'animation, modificateurs de valeurs par expression et/ou modificateurs par texturage de l'attribut,
- si un répertoire de contextualisation existe dans ledit contexte, des valeurs d'attributs et des modificateurs définis dans un répertoire global du dit contexte et
- les valeurs d'attributs et des modificateurs définis dans chaque répertoire de contextualisation d'un contexte comportant ledit contexte.

On note que les modificateurs d'animation fonctionnent par courbe définies par des clés d'animation ou une fonction mathématique, les modificateurs de valeurs par expression sont des formules mathématiques, comme dans un tableur, produisant une animation ou non et les modificateurs par texturage de l'attribut permettent que la valeur de l'attribut soit modifiée en fonction de la position dans l'espace de l'objet, de son orientation, et plus généralement de toute propriété géométrique multidimensionnelle intrinsèque à l'objet ou résultant de son immersion dans un espace multidimensionnel.

Dans des modes de réalisation, au cours de l'étape de formation de sous-contextes globaux, on forme un sous-contexte global dans chaque contexte, hormis les sous-contextes globaux.

Dans des modes de réalisation, au cours de l'étape de formation de sous-contextes globaux, chaque sous-contexte global présente les propriétés de ne pouvoir ni être renommé, ni être supprimé.

Ainsi, des références relatives ou des pointeurs peuvent être utilisés par tout objet, en tout point de l'arborescence.

Dans des modes de réalisation, au cours de l'étape de formation de sous-contextes globaux, un contexte « global » reçoit des contextes directement ou sous forme de raccourcis.

Les objets des sous-contextes des contextes globaux sont rendus disponibles de la même manière qu'exposé précédemment.

Dans des modes de réalisation :
- au cours de l'étape de formation d'une arborescence, on génère, pour le contexte racine, un sous-contexte dit « default » et
- au cours de l'étape d'attribution, on affecte à chaque attribut de type objet à afficher qui référence un objet du contexte default, la valeur de l'objet du contexte default.

Grâce à ces dispositions, on peut éviter d'avoir à redéfinir des valeurs d'attributs communs à plusieurs objets dans l'arborescence.

Dans des modes de réalisation, le procédé objet de l'invention comporte une étape de création d'au moins un raccourci pointant vers un contexte, le contexte pointé par au moins un raccourci restant à sa position, l'étape d'attribution de valeurs aux attributs des objets dudit contexte étant réalisée en mettant en œuvre chaque dit raccourci.

Grâce à ces dispositions, un contexte peut être mis en œuvre dans plusieurs contextes sans être intégralement copié. L'édition conjointe de plusieurs contextes liés entre eux est ainsi facilitée.

Dans des modes de réalisation, le procédé objet de l'invention comporte une étape de création d'au moins un raccourci pointant vers objet, l'objet pointé par au moins un raccourci restant à sa position, l'étape d'attribution de valeurs aux attributs dudit objet étant réalisée en mettant en œuvre chaque dit raccourci.

Grâce à ces dispositions, un objet peut être mis en œuvre dans plusieurs contextes sans être intégralement copié. L'édition conjointe de plusieurs objets liés entre eux est ainsi facilitée.

Dans des modes de réalisation, au cours de l'étape de formation d'une arborescence, lorsqu'aucun contexte courant n'est défini pour la création d'un contexte ou d'un objet, la génération d'un contexte ou d'un objet est effectuée dans le contexte racine et, lorsqu'un contexte courant est défini, la génération d'un contexte ou d'un objet est effectuée dans le contexte courant.

Grâce à ces dispositions, la génération de contextes et d'objet est uniforme et permet, ensuite, le déplacement du contexte ou de l'objet nouvellement créé dans un autre contexte.

Dans des modes de réalisation, au cours de l'étape de formation de l'arborescence hiérarchique, on attribue, à chaque contexte et à chaque objet dans un contexte, un nom représentant au moins une partie de l'enchaînement successif des contextes qui le comportent, en partant du répertoire racine.

Grâce à ces dispositions, les noms des contextes et des objets sont intelligibles.

Dans des modes de réalisation, le procédé objet de la présente invention comporte :
- une étape de sélection d'une pluralité d'objets,
- une étape d'affichage automatique d'un seul champ d'édition d'attribut pour des attributs éditables de même nom, de même type et pouvant recevoir les mêmes modificateurs, d'au moins deux des objets sélectionnés et
- une étape d'édition conjointe de la valeur d'attributs éditables de même nom, de même type et pouvant recevoir les mêmes modificateurs, pour au moins deux des objets sélectionnés.

Grâce à ces dispositions, on peut sélectionner une pluralité d'objets et les éditer conjointement. Par exemple, la résolution, la couleur, la police, de plusieurs documents ou contenus multimédias peuvent être édité simultanément. On note qu'un objet, au sens de ces modes de réalisation doit être compris comme dans la programmation objet : un objet est capable d'actions (« méthodes » en C++) et ses actions sont paramétrables en modifiant ses attributs (« variables membres » en C++).

Dans des modes de réalisation, au cours de l'étape d'affichage, on affiche un seul champ d'édition d'attribut pour des attributs éditables de même nom et de même type d'au moins deux des objets sélectionnés, lesdits attributs de même nom et de même type étant édités conjointement au cours de l'étape d'édition.

On rappelle ici que deux attributs sont de même type lorsqu'ils peuvent prendre des valeurs de même type, par exemple bouléennes, flottantes, couleur, vecteur, numérique, pointage sur un autre objet.

Dans des modes de réalisation, au cours de l'étape d'affichage, on affiche un seul champ d'édition d'attribut pour des attributs éditables de même nom présentant le ou les mêmes modificateurs, lesdits attributs de même nom et présentant le ou les mêmes modificateurs étant édités conjointement au cours de l'étape d'édition.

On rappelle ici qu'un modificateur (en anglais « modifier ») est une capacité de modification d'un objet.

Dans des modes de réalisation, au cours de l'étape d'affichage, on affiche un seul champ d'édition d'attribut pour des attributs éditables de même nom présentant les mêmes capacité de modification dans le temps et/ou dans l'espace, lesdits attributs de même nom et de même capacité étant édités conjointement au cours de l'étape d'édition.

On rappelle ici que la capacité de modification dans le temps correspond à l'animation, notamment dans une séquence d'images et la capacité de modification dans l'espace correspond à la possibilité d'associer une texture à un attribut d'un objet.

Dans des modes de réalisation, le procédé objet de la présente invention comporte une étape de sélection d'un attribut à éditer commun à au moins deux des objets sélectionnés et une étape de sélection d'un mode d'édition conjointe de la valeur de cet attribut commun d'au moins deux objets sélectionnés.

Dans des modes de réalisation, pour un dit mode d'édition, au cours de l'étape d'édition, on affecte à tous les attributs des différents objets sélectionnés possédant cet attribut commun la valeur de l'attribut commun du dernier objet sélectionné. Ainsi, si on a édité un objet, on peut rendre cohérents tous les autres objets sélectionnés.

Dans des modes de réalisation, pour un dit mode d'édition, au cours de l'étape d'édition, on donne la même valeur à l'attribut sélectionné des différents objets sélectionnés qui possèdent cet attribut. L'édition se fait ainsi en valeur absolue. Le choix de la valeur absolue commune peut être effectué en saisissant cette valeur ou en déplaçant un curseur le long d'une règle représentant toutes les valeurs possibles (par exemple entre 0 et 1). Par exemple, on donne ainsi exactement la même couleur à différents objets représentés dans différentes images.

Dans des modes de réalisation, pour un dit mode d'édition, au cours de l'étape d'édition, on fait varier de la même valeur l'attribut sélectionné des différents objets sélectionnés qui possèdent cet attribut. L'édition se fait ainsi en valeur relative. Le choix de la valeur absolue commune peut être effectué en saisissant cette valeur ou en déplaçant un curseur le long d'une règle représentant toutes les valeurs possibles (par exemple entre 0 et 1). Par exemple, on obscurcit ainsi d'autant les couleurs de différents objets représentés dans différentes images.

Dans des modes de réalisation, pour un dit mode d'édition, au cours de l'étape d'édition, on copie la valeur du même attribut d'un objet et on l'affecte à l'attribut en cours d'édition. On note que l'objet dont on copie la valeur d'attribut commun peut être l'un des objets sélectionnés, par exemple il s'agit, par défaut, de la valeur de l'attribut commun du premier ou du dernier objet sélectionné, ou un objet non sélectionné. Dans ce dernier cas, on verrouille préliminairement la sélection d'objets.

Dans des modes de réalisation, pour un dit mode d'édition, au cours de l'étape d'édition, on affecte à la valeur de l'attribut commun, un objet non sélectionné. Ce mode d'édition ne concerne que les attributs qui acceptent un ou plusieurs objets comme valeur d'attribut et que l'on nomme « attributs de type 'objet' ».

Dans des modes de réalisation, au cours de l'étape de sélection d'une pluralité d'objets, on affiche le contenu de chacun des objets sélectionnés dans une fenêtre de visualisation commune et au cours de l'étape d'édition conjointe, on modifie en temps réel les contenus des objets dont les contenus sont affichés dans la fenêtre de visualisation commune. On visualise ainsi, sur chacun des objets, l'effet de l'édition conjointe sur chacun des objets sélectionnés.

Selon un deuxième aspect, la présente invention vise un dispositif d'organisation d'un système d'objets logiciels dotés d'attributs, qui comporte :
- un moyen de formation d'une arborescence hiérarchique de groupes d'objets appelés « contextes », l'arborescence comportant un contexte racine dans lequel se trouvent tous les autres contextes et tous les objets, chaque objet de ladite arborescence étant dans un dit contexte,
- un moyen de formation, pour chacun d'une pluralité de contextes, d'un sous-contexte dit « global » pour exposer des objets à partir d'un point de l'arborescence de contextes, chaque sous-contexte global servant à exposer des objets globalement à partir d'un point d'arborescence à toute la sous-arborescence, tout objet qui est placé dans un contexte global étant rendu disponible à tous les objets du contexte où se trouve le contexte « global » considéré, dit contexte « père », et de tous les sous-contextes du contexte père.

- un moyen de formation, pour chacun d'une pluralité de contextes, d'un répertoire dit « de contextualisation » de valeurs d'attributs pour les objets du dit contexte,
- un moyen d'attribution, à au moins un attribut d'un objet de l'arborescence à afficher, de la valeur de l'attribut de même nom et de même type, de plus haut rang pour lequel il a été attribué une valeur dans un répertoire de contextualisation,
- un moyen de détermination d'objets à afficher et
- un moyen d'affichage de chaque objet à afficher, avec ses attributs et les valeurs de ses attributs, en tenant compte des répertoires de contextualisation, lorsqu'une valeur a été affectée à un attribut dans un répertoire de contextualisation d'un contexte ou un sous-contexte contenant ledit objet, la valeur de l'attribut compatible de l'objet édité prenant la valeur du répertoire de contextualisation du contexte de plus haut niveau pour lequel l'attribut a été doté d'une valeur, chaque contexte héritant automatiquement des valeurs d'attribut associées au contexte de plus haut niveau auquel ledit contexte appartient.

Les avantages, buts et caractéristiques particulières de ce dispositif étant similaires à ceux du procédé objet du premier aspect de la présente invention, ils ne sont pas rappelés ici.

La présente invention vise, selon un troisième aspect, un procédé d'organisation d'un système d'objets logiciels dotés d'attributs, qui comporte :
- une étape de formation d'une arborescence hiérarchique de groupes d'objets appelés « contextes », l'arborescence comportant un contexte racine dans lequel se trouvent tous les autres contextes et tous les objets, chaque objet de ladite arborescence étant dans un dit contexte,
- une étape de formation, pour au moins un contexte, d'un sous-contexte dit « global » pour exposer des objets à partir d'un point de l'arborescence de contextes,
- une étape de formation, pour au moins un contexte, d'un répertoire dit « de contextualisation » de valeurs d'attributs pour les objets du dit contexte et
- une étape d'attribution, à chaque attribut d'un objet de l'arborescence à afficher, de la valeur de l'attribut de même nom, de même type et de même modificateur, de plus haut rang pour lequel il a été attribué une valeur dans un répertoire de contextualisation.

On note que les contextes globaux servent à exposer des objets globalement à partir d'un point d'arborescence à toute la sous-arborescence. Grâce à ces dispositions, tous les objets et contextes présents dans un contexte doté d'un répertoire de contextualisation sont cohérents puisqu'ils ont des valeurs d'attribut communes.

Dans des modes de réalisation, au cours de l'étape d'attribution, on affecte, à chaque attribut d'un objet de l'arborescence, de la valeur de l'attribut de même nom et de même type de plus haut rang pour lequel il a été attribué une valeur dans un répertoire de contextualisation.

Grâce à ces dispositions, les attributs de tous les objets et contextes sont cohérents, indépendamment de leurs valeurs propres.

Selon un quatrième aspect, la présente invention vise un dispositif d'organisation d'un système d'objets logiciels dotés d'attributs, qui comporte :
- un moyen de formation d'une arborescence hiérarchique de groupes d'objets appelés « contextes », l'arborescence comportant un contexte racine dans lequel se trouvent tous les autres contextes et tous les objets, chaque objet de ladite arborescence étant dans un dit contexte,
- un moyen de formation, pour au moins un contexte, d'un sous-contexte dit « global » pour exposer des objets à partir d'un point de l'arborescence de contextes,
- un moyen de formation, pour au moins un contexte, d'un répertoire dit « de contextualisation » de valeurs d'attributs pour les objets du dit contexte et
- un moyen d'attribution, à chaque attribut d'un objet de l'arborescence à afficher, de la valeur de l'attribut de même nom, de même type et de même modificateurs, de plus haut rang pour lequel il a été attribué une valeur dans un répertoire de contextualisation.

Les avantages, buts et caractéristiques particulières de ce dispositif étant similaires à ceux du procédé objet du troisième aspect de la présente invention, ils ne sont pas rappelés ici.

La présente invention vise, selon un cinquième aspect, un procédé de traitement d'informations pour éditer des objets dotés d'attributs, qui comporte :
- une étape de sélection d'une pluralité d'objets,
- une étape d'affichage automatique d'un seul champ d'édition d'attribut pour des attributs éditables de même nom d'au moins deux des objets sélectionnés et
- une étape d'édition conjointe de la valeur d'attributs éditables de même nom pour au moins deux des objets sélectionnés.

Grâce à ces dispositions, on peut sélectionner une pluralité d'objets et les éditer conjointement. Par exemple, la résolution, la couleur, la police, de plusieurs documents ou contenus multimédias peuvent être édité simultanément. On note qu'un objet, au sens de la présente invention doit être compris comme dans la programmation objet : un objet est capable d'actions (« méthodes » en C++) et ses actions sont paramétrables en modifiant ses attributs (« variables membres » en C++).

Dans des modes de réalisation, le procédé objet de la présente invention comporte une étape de sélection d'un attribut à éditer commun à au moins deux des objets sélectionnés et une étape de sélection d'un mode d'édition conjointe de la valeur de cet attribut commun d'au moins deux objets sélectionnés.

Selon un sixième aspect, la présente invention vise un dispositif de traitement d'informations pour éditer des objets dotés d'attributs, qui comporte :
- un moyen de sélection d'une pluralité d'objets,
- un moyen d'affichage automatique d'un seul champ d'édition d'attribut pour des attributs éditables de même nom d'au moins deux des objets sélectionnés et
- un moyen d'édition conjointe de la valeur d'attributs éditables de même nom pour au moins deux des objets sélectionnés.

Les avantages, buts et caractéristiques particulières de ce dispositif étant similaires à ceux du procédé objet du cinquième aspect de la présente invention, ils ne sont pas rappelés ici.

La présente invention vise, selon un septième aspect, un procédé d'édition de calques représentés dans une fenêtre d'édition de calques d'images, qui comporte :
- une étape de sélection d'un objet dans une représentation d'objets,
- une étape de sélection d'un calque dans la fenêtre d'édition de calque,
- une étape d'ajout de l'objet dans ledit calque,
- une étape de détermination si l'objet sélectionné est dans au moins un autre calque de la même image et
- si l'objet est dans au moins un calque de la même image, une étape de retrait dudit objet de chaque calque différent du calque sélectionné.

Grâce à ces dispositions, l'édition de calque est particulièrement simple et visuelle. De plus, on évite automatiquement qu'un même objet soit dupliqué dans différents calques.

Dans des modes de réalisation, le procédé objet de l'invention comporte une étape de génération d'une pluralité de représentations d'objets, l'étape de sélection de l'objet étant effectuée sur n'importe laquelle des représentations de l'objet.

Grâce à ces dispositions, l'utilisateur peut visualiser de différentes manières les objets qu'il peut sélectionner en vue de l'édition de calques.

Dans des modes de réalisation, l'étape de sélection d'un objet est effectuée en appuyant sur un bouton d'un dispositif de pointage dont le curseur est positionné sur la représentation de l'objet et dans lequel l'étape de sélection d'un calque se fait en déplaçant le curseur sur la représentation du calque dans l'éditeur de calques sans relâcher ledit bouton, et en relâchant ledit bouton une fois que le curseur du dispositif de pointage est sur le calque sélectionné.

Grâce à ces dispositions, un simple « drag and drop » suffit pour éditer un calque.

Selon un huitième aspect, la présente invention vise un dispositif d'édition de calques représentés dans une fenêtre d'édition de calques d'images, qui comporte :
- un moyen de sélection d'un objet dans une représentation d'objets,
- un moyen de sélection d'un calque dans la fenêtre d'édition de calque,
- un moyen d'ajout de l'objet dans ledit calque,
- un moyen de détermination si l'objet sélectionné est dans au moins un autre calque de la même image et
- un moyen de retrait d'objet adapté, si l'objet est dans au moins un calque de la même image, à retirer ledit objet de chaque calque différent du calque sélectionné.

Les avantages, buts et caractéristiques particulières de ce dispositif étant similaires à ceux du procédé objet du septième aspect de la présente invention, ils ne sont pas rappelés ici.

Les différents aspects de la présente invention et les caractéristiques principales ou particulières des différents aspects de la présente invention sont destinés à être combinés pour former un seul procédé et un seul dispositif de traitement de données.

### BREVE DESCRIPTION DES DESSINS

D'autres avantages, buts et caractéristiques de la présente invention ressortiront de la description qui va suivre faite, dans un but explicatif et nullement limitatif, en regard des dessins annexés, dans lesquels :
- la figure 1 représente, schématiquement, un écran d'édition conjointe d'attributs d'une pluralité d'objets, mis en œuvre dans un mode de réalisation particulier du procédé d'édition conjointe objet de la présente invention,
- la figure 2 représente, sous forme d'un logigramme, des étapes d'un mode de réalisation particulier du procédé d'édition conjointe d'objets selon la présente invention,
- la figure 3 représente, schématiquement, un écran d'édition de calques mis en œuvre dans un mode de réalisation particulier du procédé de création de calques objet de la présente invention,
- la figure 4 représente, sous forme d'un logigramme, des étapes d'un mode de réalisation particulier du procédé d'organisation d'un système d'objets selon la présente invention et
- la figure 5 représente, sous forme d'un logigramme, des étapes d'un mode de réalisation particulier du procédé d'édition de calques selon la présente invention.

### DESCRIPTION DETAILLEE DE MODES DE REALISATION DE L'INVENTION

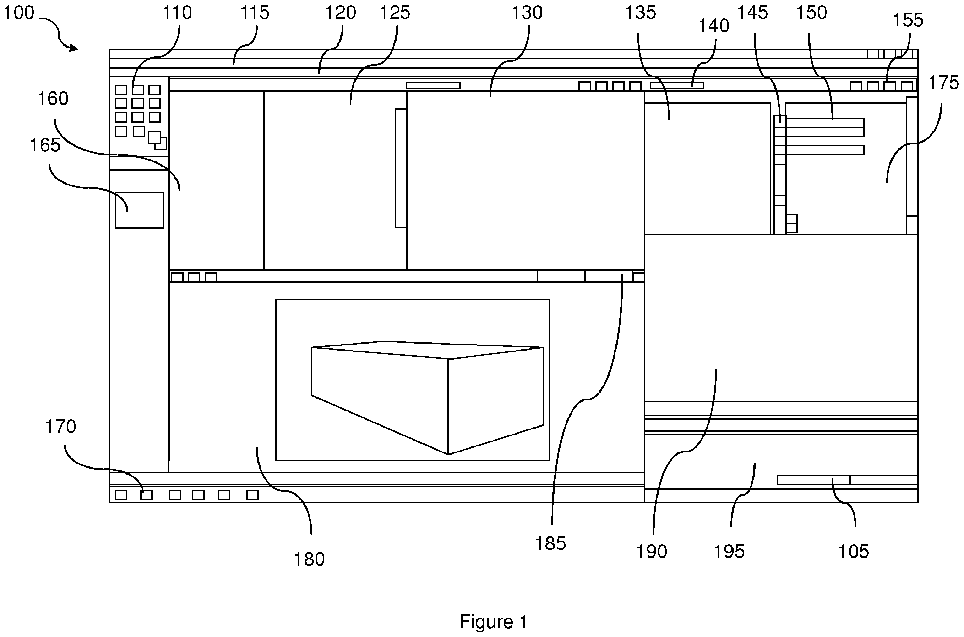

On observe, en figure 1, une interface d'édition d'attributs d'objets affichée sur un écran 100. Cette interface comporte :
- une barre d'adresse 120 du projet en cours d'édition, dans laquelle apparaît le nom du projet sélectionné par l'utilisateur, par exemple par navigation dans une liste de projet, l'adresse pouvant comporter l'intégralité du chemin pour accéder au projet sélectionné (par exemple, c://projets/projet auto/voiture sportive) ; la barre d'adresse 120 permet de naviguer jusqu'à un objet qui peut se trouver dans des contextes hiérarchiquement organisés,
- une liste 160 hiérarchisée de répertoires liés au projet en cours de traitement,
- une liste d'objets 125 présents dans le répertoire sélectionné dans la liste 160 et qui peuvent être sélectionnés,
- une fenêtre 130 d'affichage du contenu du dernier objet sélectionné,
- une boîte à outil 110, dans laquelle des icônes peuvent être sélectionnés par l'utilisateur pour dessiner dans une fenêtre de visualisation d'image 180,
- un menu principal 115 contenant des titres de menus déroulants de type connu (« File », « Edit », « Create », « Tools », « Animate », « Render », « Filter », « Window », « Layout » et « Help », par exemple),
- une série 170 d'icônes pour ouvrir d'autres programmes ou répertoires de fichiers, liés au système d'exploitation du système informatique sur lequel fonctionne le logiciel implémentant le procédé objet de la présente invention, par exemple la barre de tâches Windows (marque déposée),
- une fenêtre de prévisualisation d'image 165, dans laquelle l'image est modifiée en temps réel en fonction des commandes d'édition et des commandes de dessin utilisées par l'utilisateur,
- une fenêtre 175 d'édition d'attributs multiples comportant une liste d'attributs d'objets sélectionnés 135, un bouton de verrouillage de sélection 140, une fenêtre 145 de représentation graphique du type d'attribut et/ou de ses modificateurs (en anglais « modifier »), une représentation 150 de la plage de variation autorisée ou de la valeur numérique de l'attribut en regard de ladite plage, des icônes 155 de gestion de la fenêtre d'édition d'attributs,
- un indicateur 185 de progression du calcul de l'image visualisée, en pourcentage,
- un navigateur d'objets sélectionnés 190,
- un éditeur de calques 195 et
- une barre de progression de calcul 105 qui change de couleur au cours de la progression des calculs.

Une fois que l'utilisateur a sélectionné des objets dans la liste 125, par exemple par sélections successives avec un dispositif de pointage tel qu'une souris, éventuellement avec des touches de contrôle (« ctrl »), automatiquement, les attributs des objets sélectionnés sont agrégés dans la liste d'attributs 135.

Les attributs d'une pluralité d'objet qui portent le même nom et ont le même type et les mêmes modificateurs sont réunis en un seul attribut dans la liste d'attributs 135.

Dans la fenêtre 175 d'édition d'attributs multiples, la sélection des objets peut être verrouillée en activant le bouton de verrouillage de sélection 140. Chaque type d'attribut, par exemple bouléen, flottant, couleur, vecteur, numérique et objet, et/ou chaque type de modificateur, par exemple animable ou texturable, correspond à une représentation graphique, ou icône, qui est représentée dans la fenêtre 145.

En sélectionnant un attribut, l'utilisateur peut éditer sa valeur en mettant en œuvre la représentation 150 qui se trouve en regard de l'attribut sélectionné, qui représente la plage de variation autorisée ou la valeur numérique de l'attribut.

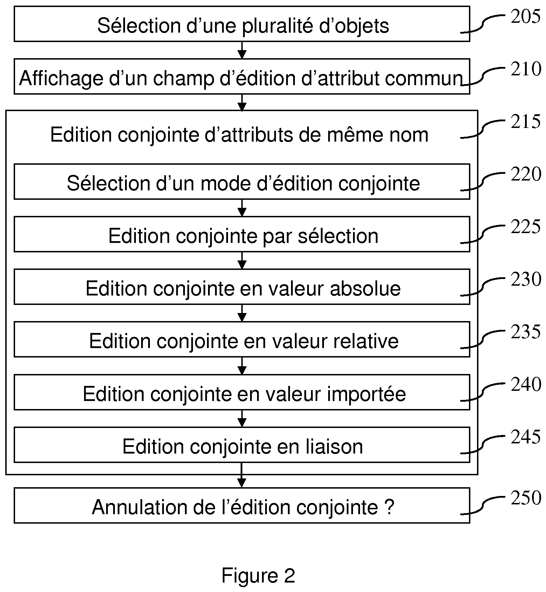

Comme exposé en regard de la figure 2, cette édition peut être effectuée en valeur absolue ou en valeur relative ou en copiant la valeur du premier ou du dernier objet sélectionné ou encore par « drag and drop » (déplacer et lâcher, en français) en partant d'un des objets, notamment en partant d'un objet non sélectionné. Les nouvelles valeurs sont affectées à tous les attributs des objets sélectionnés qui sont unifiés en l'attribut dans la liste 135 qui est en regard de la représentation 150.

On observe, en figure 2, un procédé de traitement d'informations pour éditer des objets dotés d'attributs, qui comporte :
- une étape 205 de sélection d'une pluralité d'objets,
- une étape 210 d'affichage automatique d'un seul champ d'édition d'attribut pour des attributs éditables de même nom, de même type et pouvant recevoir les mêmes modificateurs, d'au moins deux des objets sélectionnés et
- une étape 215 d'édition conjointe de la valeur d'attributs éditables de même nom, de même type et pouvant recevoir les mêmes modificateurs, pour au moins deux des objets sélectionnés.

Ainsi, on peut sélectionner une pluralité d'objets et les éditer conjointement. Par exemple, la résolution, la couleur, la police, de plusieurs documents ou contenus multimédias peuvent être édité simultanément.

Préférentiellement, au cours de l'étape d'affichage 210, on affiche un seul champ d'édition d'attribut (en figure 1, ce champ comporte le nom de l'attribut, la représentation de type et la plage de variation autorisée ou de valeur) pour des attributs éditables de même nom et de même type d'au moins deux des objets sélectionnés. Les attributs de même nom et de même type sont alors édités conjointement au cours de l'étape d'édition 215. On rappelle ici que deux attributs sont de même type lorsqu'ils peuvent prendre des valeurs de même type, par exemple bouléennes, flottantes, couleur, vecteur, numérique, pointage sur un autre objet.

Préférentiellement, au cours de l'étape d'affichage 210, on affiche un seul champ d'édition d'attribut (en figure 1, ce champ comporte le nom de l'attribut, la représentation de type et/ou du type de modificateur et la plage de variation autorisée ou de valeur) pour des attributs éditables de même nom présentant le ou les mêmes modificateurs. Les attributs de même nom et présentant le ou les mêmes modificateurs sont alors édités conjointement au cours de l'étape d'édition 215. On rappelle ici qu'un modificateur est une capacité de modification d'un objet.

Par exemple, au cours de l'étape d'affichage d'attributs 210, on affiche un seul champ d'édition d'attribut pour des attributs éditables de même nom présentant, comme modificateurs, les mêmes capacités de modification dans le temps et/ou dans l'espace. On rappelle ici que la capacité de modification dans le temps correspond à l'animation, notamment dans une séquence d'images et la capacité de modification dans l'espace correspond à la possibilité d'associer une texture à un objet.

Au cours de l'étape de sélection d'objets 205, l'affichage des objets se fait, par exemple, dans une fenêtre d'une interface multifenêtres. Dans cette fenêtre, sont représentés, par exemple par leur nom, des répertoires, des sous-répertoires et des objets. Un objet est conservé dans un fichier et est défini par un chemin, par exemple un fichier représentatif d'une image, doté d'au moins un attribut.. Un objet, au sens de la présente invention doit être compris comme dans la programmation objet : un objet est capable d'actions (« méthodes » en C++) et ses actions sont paramétrables en modifiant ses attributs (« variables membres » en C++).

La sélection d'objet se fait, par exemple, avec un dispositif de pointage, par exemple une souris, en sélectionnant un rectangle passant sur plusieurs noms d'objets ou en cliquant sur un objet en appuyant simultanément sur la touche « Ctrl » du clavier.

La visualisation des attributs se fait, par exemple, dans une autre fenêtre de la même interface. Dans une colonne sont représentés tous les attributs éditables des objets sélectionnés. De manière automatique, les attributs communs ou compatibles (c'est-à-dire de même nom, de même type et, éventuellement, de mêmes modificateurs), ne sont pas dupliqués. Ainsi, en éditant un attribut commun, on fait varier les valeurs des attributs pour tous les objets sélectionnés.

Préférentiellement, au cours de l'étape de sélection d'objets 205, les contenus des différents objets sélectionnés sont affichés dans une autre sous-fenêtre que celle où est effectuée la sélection. Par exemple, si ces objets sont des images fixes ou des séquences d'images, ces images fixes ou la première image de chaque séquence d'image sont affichés côte à côte dans cette sous-fenêtre.

Ainsi, préférentiellement et comme illustré en figure 1, l'interface comporte au moins :
- une fenêtre listant les objets qui peuvent être sélectionnés,
- une fenêtre listant les attributs agrégés des objets sélectionnés et
- une fenêtre représentant le contenu des objets sélectionnés.

Au cours de l'étape 215 d'édition conjointe, on sélectionne un attribut commun pour plusieurs objets, par exemple en cliquant sur le nom de cet attribut ou sur la plage de valeur ou la représentation de la valeur de l'attribut considéré.

Puis, au cours d'une étape 220, on sélectionne un mode d'édition, par exemple en cliquant sur un icône le représentant.

Dans un premier mode d'édition conjointe, dit « par sélection », au cours d'une étape 225, on affecte à tous les attributs des différents objets sélectionnés possédant cet attribut commun la valeur de l'attribut du dernier objet sélectionné. Ainsi, si on a édité un objet, on peut rendre cohérents tous les autres objets sélectionnés.

Par exemple, dans le domaine du traitement d'image, si on a donné une certaine valeur de couleur ou de flou à une image, cette valeur est automatiquement donnée aux autres images sélectionnées conjointement, dès lors que la dernière image sélectionnée est celle sur laquelle la sélection de couleur ou de flou a été choisie.

Dans le domaine du traitement de texte, si on a choisi un type de police, une taille de police, on peut ainsi affecter ces choix à d'autres textes sélectionnés conjointement, dès lors que la dernière sélection est celle du texte pour lequel on a choisi le type ou la taille de la police.

Dans une variante du premier mode d'édition, c'est le premier objet sélectionné qui donne ses valeurs d'attributs aux autres objets sélectionnés.

Dans un deuxième mode d'édition conjointe, dit « en valeur absolue », au cours d'une étape 230, on donne la même valeur à l'attribut sélectionné des différents objets sélectionnés qui possèdent cet attribut. L'édition se fait ainsi en valeur absolue. Le choix de la valeur absolue commune peut être effectué en saisissant cette valeur ou en déplaçant un curseur le long d'une règle représentant toutes les valeurs possibles (par exemple entre 0 et 1). Par exemple, on donne ainsi exactement la même couleur à différents objets représentés dans différentes images.

Dans un troisième mode d'édition conjointe, dit « en valeur relative », au cours d'une étape 235, on fait varier de la même valeur l'attribut sélectionné des différents objets sélectionnés qui possèdent cet attribut. L'édition se fait ainsi en valeur relative. Le choix de la valeur absolue commune peut être effectué en saisissant cette valeur ou en déplaçant un curseur le long d'une règle représentant toutes les valeurs possibles (par exemple entre 0 et 1). Par exemple, on obscurcit ainsi d'autant les couleurs de différents objets représentés dans différentes images.

Dans un quatrième mode d'édition conjointe, dit « en valeur importée », au cours d'une étape 240, on copie la valeur du même attribut d'un objet et on l'affecte à l'attribut en cours d'édition. On note que l'objet dont on copie la valeur d'attribut commun peut être l'un des objets sélectionnés, par exemple il s'agit, par défaut de la valeur de l'attribut commun du premier ou du dernier objet sélectionné, ou un objet non sélectionné. Dans ce dernier cas, on verrouille préliminairement la sélection d'objets, avec le bouton 140 puis on effectue un drag and drop à partir de l'objet non sélectionné.

Dans un cinquième mode d'édition conjointe, dit « en liaison », au cours d'une étape 245, on affecte à la valeur de l'attribut commun, un objet non sélectionné. Ce mode d'édition ne concerne que les attributs de type « objet » et est réalisé par exemple en effectuant un drag and drop ou en sélectionnant l'objet dans une « combo box ».

Préférentiellement, au cours de l'étape 215 d'édition conjointe, on modifie en temps réel les contenus des objets (par exemple les images) affichées dans la fenêtre de contenu (fenêtre 180, en figure 1), pour visualiser l'effet de l'édition conjointe sur chacun des objets sélectionnés.

Préférentiellement, une fonction d'annulation de la ou des dernières opérations d'édition conjointe est prévue. Ainsi, après une édition conjointe, l'utilisateur peut revenir à l'état précédent cette édition au cours d'une étape 250.

Dans des modes de réalisation, pour chaque attribut commun à plusieurs objets, un bouton présent dans la fenêtre d'édition conjointe d'attributs donne accès à une grille représentant, pour chaque objet, la valeur de l'attribut commun qui se trouve en regard du bouton. Ainsi, l'utilisateur peut visualiser et éditer toutes les valeurs d'un attribut pour différents objets.

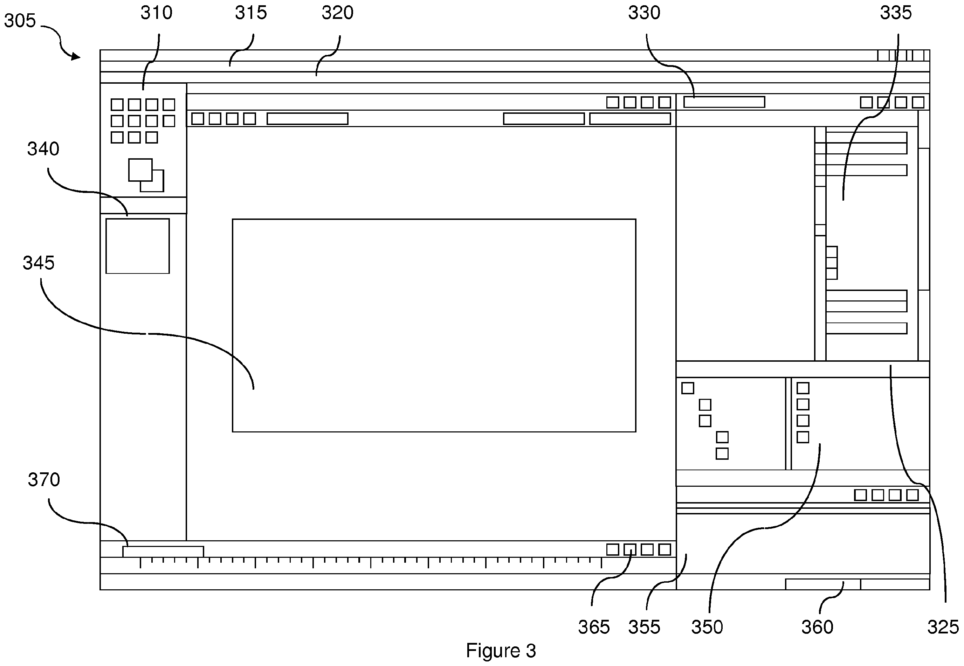

On observe, en figure 3, une interface affichée sur un écran 305. Cette interface comporte :
- une boîte à outil 310, dans laquelle des icônes peuvent être sélectionnés par l'utilisateur pour dessiner dans une fenêtre de visualisation d'image 345,
- un menu principal 315 contenant des titres de menus déroulants de type connu (« File », « Edit », « Create », « Tools », « Animate », « Render », « Filter », « Window », « Layout » et « Help », par exemple),
- une barre d'adresse 320 du contexte courant,
- une fenêtre de prévisualisation d'image 340, dans laquelle l'image est modifiée en temps réel en fonction des commandes d'édition et des commandes de dessin,
- un bouton de verrouillage de sélection 330,
- une fenêtre d'édition d'attributs multiples 335,
- des boutons 325 de gestion du contenu des fenêtres d'édition,
- un navigateur de contexte 350,
- un éditeur de calques 355,
- une barre de progression de calcul 360 qui change de couleur au cours de la progression des calculs,
- des boutons de gestion 365 de l'espace de travail, notamment la fenêtre de visualisation d'image 345 et
- une ligne de temps 370 permettant de repérer l'image représentée dans la fenêtre de visualisation d'image 345 dans une séquence d'images, par exemple d'une animation en images de synthèse.

Le fonctionnement de chacune des fenêtres illustrées en figure 3 est explicité plus loin.

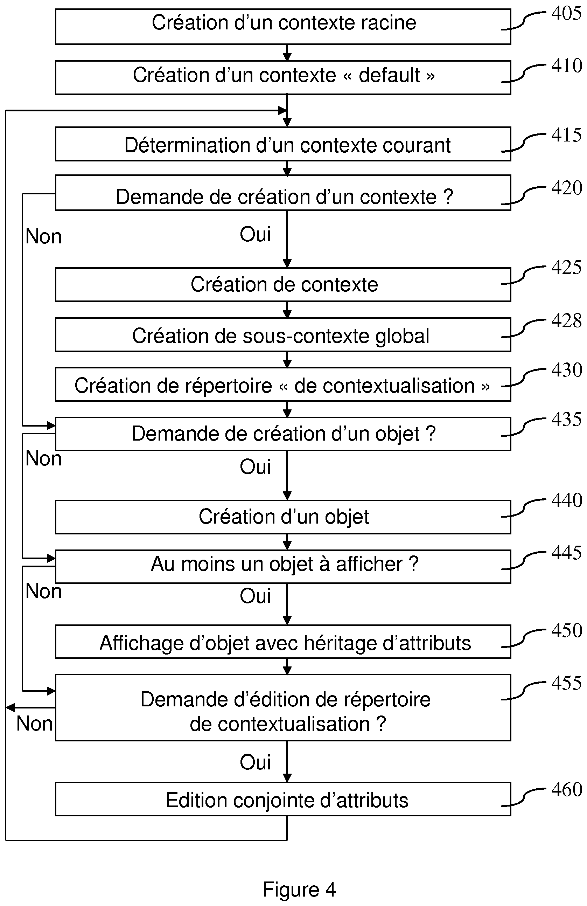

Le procédé d'organisation partiellement automatique d'un système d'objets selon la présente invention permet la gestion d'objets et de contextes dans lesquels sont groupés des objets. Chaque objet appartient à un contexte qui peut, lui-même, appartenir à un autre contexte. On observe, dans un mode de réalisation particulier de ce procédé, en figure 4, une étape 405 de création d'un contexte racine, qui correspond à un projet, par exemple une image, une partie d'un programme ou un programme audiovisuel d'images animées. Au cours d'une étape 410, on crée, dans le contexte racine, un contexte « default » contenant tous les objets que le logiciel crée par défaut. Il s'agit des objets que le logiciel gère automatiquement mais qui sont mis à la disposition des utilisateurs, qui peuvent les référencer dans les attributs de type « objet ». Lors de l'affichage d'un objet, on affecte à chaque attribut de type objet de l'objet à afficher qui référence un objet du répertoire default, la valeur de l'objet du répertoire default.

Grâce à ces dispositions, on peut éviter d'avoir à redéfinir des valeurs d'attributs communs à plusieurs objets dans l'arborescence.

Puis, au cours d'une étape 415, on détermine un contexte courant. Si un contexte est sélectionné, explicitement ou implicitement, il est le contexte courant. Un contexte est sélectionné explicitement lorsque l'utilisateur clique sur sa représentation ou saisit son adresse dans une barre de contextes. Un contexte est sélectionné implicitement lorsqu'un objet est sélectionné : il s'agit du contexte de plus bas niveau dans lequel se trouve l'objet sélectionné. Si aucun contexte n'est sélectionné, le contexte racine est le contexte courant.

Au cours d'une étape 420, on détermine si l'utilisateur commande la création d'un nouveau contexte, par exemple par sélection (« clic ») sur un icône représentant la création d'un contexte. Si oui, au cours d'une étape 425, on crée, dans le contexte courant, un nouveau contexte possédant un nom par défaut (par exemple ayant comme terminaison « /contexteN » N étant le premier nombre positif tel que « contexteN » ne soit pas la terminaison de nom d'un contexte déjà présent dans le contexte courant et, avant ladite terminaison, l'enchainement des noms des contextes auquel le nouveau contexte appartient).

Au cours d'une étape 428, on crée automatiquement, dans le contexte qui vient d'être créé, un sous-contexte "global". On note que les contextes globaux servent à exposer des objets globalement à partir d'un point d'arborescence à toute la sous-arborescence.

On forme un sous-contexte global dans chaque contexte, hormis les sous-contextes globaux.

Au cours de l'étape de formation d'un sous-contexte global, chaque sous-contexte global présente les propriétés de ne pouvoir ni être renommé, ni être supprimé. Ainsi, des références relatives ou des pointeurs peuvent être utilisés par tout objet, en tout point de l'arborescence.

Au cours d'une étape 430, on crée, à la demande de l'utilisateur, dans le contexte qui vient d'être créé, un « répertoire de contextualisation » définissant des valeurs d'attributs pour les objets du dit contexte, c'est-à-dire du contexte courant et de tout contexte que le contexte courant contient ou est amené à contenir. Ces valeurs sont prioritaires, et on affecte, à chaque attribut d'un objet de l'arborescence à afficher, la valeur de l'attribut de même nom, de même type et, éventuellement, de même modificateurs, de plus haut rang pour lequel il a été attribué une valeur dans un répertoire de contextualisation. Ainsi, tous les objets et contextes présents dans un contexte doté d'un répertoire de contextualisation sont cohérents puisqu'ils ont des valeurs d'attribut communes.

Si le résultat de l'étape 420 est négatif, on passe à une étape 435. Au cours de l'étape 435, on détermine si l'utilisateur commande la création d'un nouvel objet, par exemple par sélection (« clic ») sur un icône représentant la création d'un objet. Si oui, au cours d'une étape 440, on crée, dans le contexte courant, un nouvel objet possédant un nom par défaut (par exemple ayant comme terminaison « /objectN » N étant le premier nombre positif tel que « /objectN » ne soit pas la terminaison de nom d'un objet déjà présent dans le contexte courant et, avant ladite terminaison, l'enchainement des noms des contextes auquel le nouvel objet appartient). Puis, l'utilisateur définit les attributs de l'objet créé. Si le résultat de l'étape 435 est négatif, on passe à une étape 445.

Au cours de l'étape 445, on détermine si au moins un objet doit être affiché, par exemple pour édition de ses attributs, des valeurs de ses attributs et/ou pour affichage.

Si oui, au cours d'une étape 450, on affiche chaque objet qui doit être affiché avec ses attributs et les valeurs de ses attributs, en tenant compte des répertoires de contextualisation, comme exposé ci-dessus. Lorsqu'une valeur a été affectée à un attribut dans un répertoire « de contextualisation » d'un contexte ou un sous-contexte contenant l'objet, la valeur de l'attribut compatible de l'objet édité prend la valeur du répertoire « de contextualisation » du contexte de plus haut niveau pour lequel l'attribut a été doté d'une valeur. Ainsi, bien que chaque contexte soit autonome, il hérite automatiquement des valeurs d'attribut associées au contexte de plus haut niveau auquel ledit contexte appartient.

Au cours de l'étape 450, on affiche aussi :
- les objets présents dans le contexte,
- les attributs des dits objets,
- les valeurs des dits attributs,
- des modificateurs des valeurs des dits attributs : modificateurs d'animation par courbe définies par des clés d'animation ou une fonction mathématique, modificateurs de valeurs par expression et/ou modificateurs par texturage de l'attribut,
- si un répertoire de contextualisation existe dans ledit contexte, des valeurs d'attributs et des modificateurs définis dans un répertoire global du dit contexte et
- les valeurs d'attributs et des modificateurs définis dans chaque répertoire de contextualisation d'un contexte comportant ledit contexte.

Si le résultat de l'étape 445 est négatif, on passe à une étape 455. Au cours de l'étape 455, on détermine si une édition de répertoire « de contextualisation » d'un contexte est demandée par l'utilisateur. Si oui, au cours d'une étape 460, l'utilisateur visualise l'ensemble des attributs du répertoire « de contextualisation » et de leurs valeurs, dans le contexte courant et peut les éditer comme exposé en regard des figures 1 et 2. Si le résultat de l'étape 455 est négatif ou à la suite de l'étape 460, on retourne à l'étape 415.

En ce qui concerne le procédé de hiérarchisation des données objet de la présente invention, on définit, ci-dessous, les contextes utilisés pour la mise en œuvre de plusieurs aspects de la présente invention
Les motivation et problèmes liés aux contextes sont résumés ci-dessous :
- plus les images de synthèse sont riches, plus les vues 3D qui les décrivent sont complexes car elles sont constituées d'un très grand nombre d'objets manipulés par l'utilisateur et
- le logiciel mettant en œuvre chacun des procédés objets de la présente invention gère plusieurs images en parallèle et donc beaucoup plus d'objets que les autres logiciels de 3D.

Il se pose donc le problème d'organiser, sélectionner et manipuler individuellement ou simultanément les milliers d'objets contenus dans les sessions du logiciel mettant en œuvre chacun des procédés objets de la présente invention.

Selon un aspect de la présente invention, on met en œuvre un procédé de hiérarchisation de données ayant les propriétés suivantes :
- de la même manière que l'on utilise un système de fichiers pour organiser les fichiers de disques durs, ce procédé organise les objets en groupes logiques à l'intérieur de répertoires appelés "contextes",
- les contextes servent ainsi à grouper et isoler un ensemble d'objets afin de pouvoir les organiser en groupes logiques. Par exemple, une ville est constituée de plusieurs milliers de bâtiments. Mis à plat, les descriptions de tous ces bâtiments sont ingérables. Avec les contextes et la mise en œuvre du procédé, on peut organiser la ville en blocs, en quartiers, en arrondissements et finalement en bâtiments.

   ```
        Contexte "ville"
        Contexte "arrondissement1"
              contexte "quartier1"
                      contexte "bloc1"
                             bâtiment 1
                             bâtiment 2
                             bâtiment 3
                      contexte "bloc2"
                             bâtiment 4
                             bâtiment 5
              contexte "quartier2"
              ...
        Contexte "arrondissement2" ...
```
- les contextes générés et gérés par le procédé objet de l'invention ont les propriétés suivantes :
   - ils sont hiérarchiques : on peut avoir des contextes dans des contextes,
   - ils ont des noms intelligibles et peuvent être renommés,
   - ils peuvent être déplacés ou copiés d'un contexte dans un autre,
   - ils peuvent avoir des raccourcis (instances dans le logiciel mettant en œuvre chacun des procédés objets de la présente invention) pour qu'un contexte puisse être placé à l'intérieur d'un autre contexte sans être déplacé,
   - ils peuvent recevoir des raccourcis d'objets (aussi appelés instances dans le logiciel mettant en œuvre chacun des procédés objets de la présente invention) afin que des objets soient partagés entre plusieurs contextes sans les copier en gardant un lien entre ces objets. Par exemple : un bâtiment peut être rangé dans deux blocs différents mais avoir les mêmes attributs (caractéristiques/propriétés),
   - ils peuvent contextualiser les objets qu'ils contiennent. C'est-à-dire que les attributs des objets peuvent être « surchargés » dans un contexte sans être réellement modifiés (si déplacé dans un autre contexte, l'objet retrouve la valeur propre des attributs surchargés). Ainsi, en injectant un objet ou son raccourci dans un contexte, on peut le spécialiser. Par exemple, dans le bloc1 de la ville, tous les bâtiments ont des façades rouges alors que dans le quartier2 les façades sont bleues et
   - ils peuvent être référencés par les objets pour spécifier le contenu d'un contexte comme une liste d'objets dynamique.

Pour l'implémentation du procédé objet de la présente invention :
- un contexte racine est généré par défaut (comme la racine « c:\ » dans Windows, marque déposée, ou « / » dans Linux, marque déposée). Dans le logiciel mettant en œuvre chacun des procédés objets de la présente invention, ce contexte racine est par exemple nommé « project:// » et basé sur la syntaxe des URL (« http:// » , « ftp:// » ...),
- tous les objets et sous-contextes sont créés par défaut dans le contexte racine,
- chaque contexte possède sa propre collection d'objets et de sous-contextes,
- chaque contexte se sérialise (attachement avec liens et connexions) ou dé-sérialise de façon autonome et complète,
- les contextes peuvent posséder des attributs (comme les objets) qui permettent de surcharger les attributs communs (même nom, même type...) qui est la même notion de compatibilité que celle utilisée pour regrouper les attributs dans l'éditeur d'attributs exposé en regard des figures 1 et 2,
- les attributs des contextes ont les mêmes propriétés et capacités que les attributs des objets,
- on définit un contexte courant qui est le contexte qui est sélectionné à un instant donné, explicitement ou implicitement (quand un objet est sélectionné puisque tout objet appartient à un contexte). Les objets et contextes nouvellement créés à partir du menu global « create » du logiciel sont ainsi automatiquement créés dans le contexte courant (quand aucun objet et aucun contexte n'est sélectionné, comme indiqué plus haut, par défaut un contexte est placé dans le contexte racine lorsqu'il est créé),
- puisque tous les objets appartiennent obligatoirement à des contextes, ils doivent en plus de leur nom (chaîne de caractère formatée comme un identifiant C++, marque déposée) définir un nom absolu qui est un chemin qui permet d'accéder à l'objet depuis la racine. Par exemple, « project://context1/context2/object » dont la syntaxe est similaire à celle des URL (acronyme de uniform resource locator pour localiseur uniforme de ressource),
- les objets qui sont créés automatiquement par défaut, appelés « default objects » (comme le matériau par défaut : « scene_material ») sont créés dans un contexte « default » qui est automatiquement créé à la racine et qui est automatiquement instancié dans tous les sous-contextes. Ainsi les objets qui référencent ces « default objects » les référencent de manière relative (chemin = default/scene_material) plutôt que par un chemin absolu (project://default/scene_material),
- les contextes servent à limiter la visibilité des objets dans leur mise en relation. Ainsi un objet qui représente un calque de vue 3D possède un attribut qui permet de spécifier quels sont les objets visibles par le calque. Ces attributs qui voient les contenus des contextes sont dits de type « context ». Leur valeur est le nom du contexte. Leur fonction est de fournir une liste des objets qui se trouvent dans le contexte spécifié et dans ses sous-contextes. Si aucun contexte n'est spécifié, la valeur de l'attribut est le contexte de l'objet auquel il appartient. Par défaut, les attributs de type « context » n'ont aucun contexte spécifié et

### Les contextes globaux :

On a vu que les contextes servent aussi à limiter la visibilité des objets lorsque les contextes sont utilisés en tant que valeur d'attributs de type « context ». Tout objet qui possède un attribut de ce type voit tous les objets du contexte spécifié et tous les sous-contextes de ce contexte, c'est-à-dire, comme exposé ci-dessus, que la valeur d'un attribut de type « contexte » est un liste d'objets composée de tous les objets présents dans le contexte référencé par l'attribut et de tous les objets présents dans les sous-contextes du contexte référencé et cela récursivement. Dans l'exemple de la ville, un objet, dont un attribut a pour valeur « quartier1 », voit donc tous les objets de « quartier1 », « quartier1/bloc1 », « quartier1/bloc2 » ...

Ce système est très pratique pour isoler les objets d'un projet selon une logique de construction (exemple de la ville) mais uniquement de bas en haut au sens de la profondeur de l'arborescence. Il arrive, lors de la construction d'une vue 3D, qu'on ait besoin de partager un objet à partir d'un point de l'arborescence. C'est-à-dire que l'on ait besoin qu'un objet puisse être accessible quel que soit le sous-niveau d'arborescence à partir d'un niveau donné. Avec le système « de bas en haut », qui est le comportement par défaut, il faudrait, dans chaque branche de l'arborescence où l'on souhaite que l'objet soit présent, soit dupliquer l'objet (ce qui rendrait les objets indépendants) soit créer des raccourcis. La solution des raccourcis, bien que meilleure, présente néanmoins l'inconvénient de ne pas être dynamique. Si on ne veut plus que l'objet soit visible dans les sous-niveaux, il faudra sélectionner et détruire tous les raccourcis de l'objet en question.

Préférentiellement, pour l'implémentation du procédé objet de l'invention, on met en œuvre un contexte dit « global ». Lors de l'étape de formation d'un contexte, le logiciel lui associe automatiquement un sous-contexte nommé « global ». Ainsi, à l'instar du contexte « default », un contexte « global » est automatiquement créé à la racine de l'arborescence.

Tout objet qui est placé (directement ou sous forme de raccourci) dans un contexte « global » est rendu disponible à tous les objets :
- du contexte où se trouve le contexte « global » considéré, dit contexte « père » et
- de tous les sous-contextes de son contexte père.

De la même manière, le contexte « global » peut recevoir des contextes directement ou sous forme de raccourci. Les objets des sous-contextes des contextes globaux sont rendus disponibles de la même manière que dans le point précédent.

A sa création, le contexte « global » est vide. Un contexte global partage les mêmes propriétés que les contextes ordinaires mais ne peut être ni renommé ni supprimé.

Selon un premier exemple, un objet placé dans le sous-contexte « global » de la racine est disponible à chaque point de l'arborescence du projet. Selon un deuxième exemple, celui de la ville, un objet qui décrit une lumière placée dans le contexte « quartier1 » pourra illuminer tous les bâtiments du quartier 1.

Les contextes globaux permettent au système de définir une visibilité de « haut en bas » dans l'arborescence des contextes. Ainsi les contextes globaux des sous-contextes voient tous les objets qu'ils contiennent plus tous les objets des contextes globaux entre ce contexte jusqu'à la racine :

```
     RACINE
            DEFAULT
                   GLOBAL
                          objet_global_1
                   CONTEXTE_1
                          GLOBAL
                                  objet_global_2
                          CONTEXTE_2
                                  GLOBAL
                          objet_1
```

Dans l'arborescence précédente, « RACINE/CONTEXTE_1/CONTEXTE_2/ objet_1 » voit tous les objets du contexte « .../CONTEXTE_2/GLOBAL » qui, même s'il est vide, propose, par construction de « haut en bas » les objets : « objet_global_1 » et « objet_global_2 ». Ces objets peuvent être référencés par « objet_1 » sous le chemin « global/objet_global_1 », par exemple.

La solution des contextes globaux a l'avantage d'être dynamique (contrairement à l'utilisation des raccourcis présentée plus haut). En effet, pour qu'un objet ne soit plus vu par les sous-contextes, il suffit d'enlever l'objet (par déplacement ou destruction) du contexte "global" et, par propagation de « haut en bas », il n'est plus accessible sous un point d'arborescence voulu.

Concernant les calques d'images, on rappelle que :
- plus les images sont riches, plus elles sont complexes et plus elles sont longues à calculer (jusqu'à dix heures),
- le moindre changement d'un objet demande un recalcul intégral de l'image qui, si la modification est mineure peut entraîner une perte de temps (on passe, par exemple, dix heures pour recalculer quelques pixels),
- pour éviter de recalculer les images intégralement, on découpe l'image en couches, appelées « calques » ou « layer », qui servent à isoler les éléments les uns des autres. Par exemple, chaque personnage et chaque élément de décor est isolé dans un calque afin que, si on ne modifie qu'un personnage, seul son calque soit recalculé. Ainsi une image avec dix calques dont un personnage dans un calque est modifié entraînera un recalcul d'une heure et non plus dix heures,
- le problème qui subsiste consiste à créer efficacement (donc visuellement) les calques.

Selon un aspect de la présente invention, on exploite les fonctionnalités de « drag and drop » afin de composer les images en déposant les objets dans les calques qui sont manipulés dans un éditeur de calques du logiciel mettant en œuvre chacun des procédés objets de la présente invention.

Pour implémenter cet aspect du procédé objet de la présente invention :
- chaque éditeur/visualiseur permet d'initier le drag and drop car un même objet peut être représenté de différentes façons dans les éditeurs/visualiseurs,
par exemple, un modèle d'automobile peut avoir la forme suivante :

| | |
|---|---|
| Représentation | Editeur |
| Rendu dans une image | Visualiseur des images |
| Modèle polygonal plein ou en fils de fer | Vue 3D accélérée par GPU |
| Item dans une arborescence | Navigateur de contextes |
| | Explorateur de projet |
| Fichier de définition géométrique | Navigateur de fichiers |
| Sélectionneur d'objet | Editeur d'attributs |

- les objets composant la vue 3D (de type « SceneObject » dans le logiciel mettant en œuvre chacun des procédés objets de la présente invention) sont déposés sur les items de calques dans l'éditeur de calques,
- si un objet n'est pas dans l'image, c'est-à-dire que l'objet n'est visible dans aucun des calques, il est ajouté dans le calque et devient par conséquent visible dans l'image,
- si l'objet déposé est visible dans l'image, il est retiré des calques dans lesquels il était visible puis ajouté dans le calque de destination afin que l'objet déposé ne soit visible (référencé) qu'une seule fois dans l'image. On évite ainsi les duplications d'objets dans différents calques.

Par exemple, avec l'écran 105, illustré en figure 1, une opération de drag and drop peut être effectuée par l'utilisateur depuis la liste d'objets 125, depuis la fenêtre de visualisation d'image 180, depuis la fenêtre 130 d'affichage du contenu du dernier objet sélectionné, ou depuis le navigateur 190 vers l'éditeur de calques 195.

Selon un aspect de la présente invention, on exploite les fonctionnalités de « drag and drop » afin de composer les images en déposant les objets dans les calques qui sont manipulés dans un éditeur de calques du logiciel mettant en œuvre chacun des procédés objets de la présente invention.

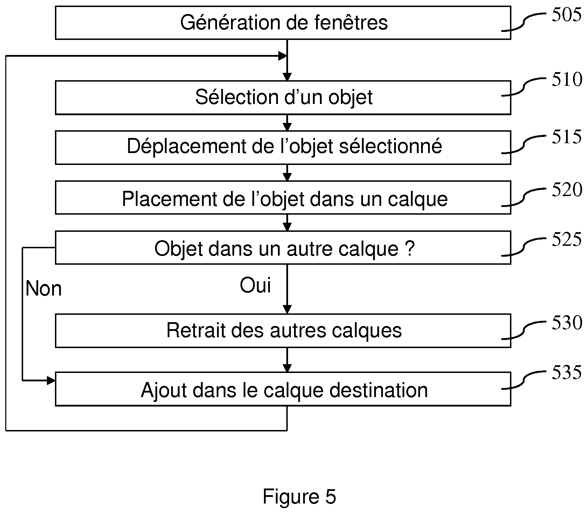

On observe, en figure 5, une étape 505 de génération d'une fenêtre d'édition de calques et d'au moins une fenêtre de représentation d'objets. Par exemple, on génère une représentation du contenu d'au moins un objet sélectionné par clic sur son nom ou sur le nom d'une image le comportant (fenêtre « visualiseur d'image »), une représentation d'au moins un objet sélectionné par son modèle polygonal (fenêtre « vue 3D », au moins une représentation d'au moins un objet sélectionné par son nom dans une arborescence (fenêtre « navigateur de contextes » et fenêtre « explorateur de projet »), une représentation d'au moins un objet sélectionné par sa définition géométrique (fenêtre « navigateur de fichiers ») et une représentation d'au moins un objet par ses attributs (fenêtre « éditeur d'attributs »).

Au cours d'une étape 510, l'utilisateur sélectionne un objet en positionnant le curseur d'un dispositif de pointage, par exemple une souris, sur une représentation d'un objet dans une fenêtre de représentation d'objets et clique sur cet objet, sans relâcher le bouton du dispositif de pointage (étape « drag » du « drag and drop »).

Au cours d'une étape 515, l'utilisateur déplace le curseur du dispositif de pointage sur une représentation d'un calque, dit « de destination », dans une fenêtre d'édition de calques. Au cours d'une étape 520, l'utilisateur relâche le bouton du dispositif de pointage (étape « drop » du « drag and drop »). Au cours d'une étape 525, on détermine si l'objet sélectionné est dans un autre calque de la même image.
- si l'objet déposé est visible dans l'image, il est retiré de chaque calque dans lequel il était précédemment visible, au cours d'une étape 530, puis ajouté dans le calque de destination, étape 535, afin que l'objet déposé ne soit visible (référencé) qu'une seule fois dans l'image. On évite ainsi les duplications d'objets dans différents calques et
- si l'objet n'est pas dans l'image, c'est-à-dire que l'objet n'est visible dans aucun des calques, au cours de l'étape 535, il est ajouté dans le calque et devient par conséquent visible dans l'image.

Puis, on retourne à l'étape 510.

## Revendications

1. Procédé d'organisation d'un système d'objets logiciels dotés d'attributs, qui comporte :
- une étape (405, 410, 425, 440) de formation d'une arborescence hiérarchique de groupes d'objets appelés « contextes », l'arborescence comportant un contexte racine dans lequel se trouve tous les autres contextes et tous les objets, chaque objet de ladite arborescence étant dans un dit contexte,
- une étape (428) de formation, pour chacun d'une pluralité de contextes, d'un sous-contexte dit « global » pour exposer des objets à partir d'un point de l'arborescence de contextes, chaque sous-contexte global servant à exposer des objets globalement à partir d'un point d'arborescence à toute la sous-arborescence, tout objet qui est placé dans un contexte global étant rendu disponible à tous les objets du contexte où se trouve le contexte « global » considéré, dit contexte « père », et de tous les sous-contextes du contexte père.
- une étape (430) de formation, pour chacun d'une pluralité de contextes, d'un répertoire dit « de contextualisation » de valeurs d'attributs pour les objets du dit contexte,
- une étape (450) d'attribution, à au moins un attribut d'un objet de l'arborescence à afficher, de la valeur de l'attribut de même nom et de même type, de plus haut rang pour lequel il a été attribué une valeur dans un répertoire de contextualisation,
- une étape de détermination d'objets à afficher et
- une étape d'affichage de chaque objet à afficher, avec ses attributs et les valeurs de ses attributs, en tenant compte des répertoires de contextualisation, lorsqu'une valeur a été affectée à un attribut dans un répertoire de contextualisation d'un contexte ou un sous-contexte contenant ledit objet, la valeur de l'attribut compatible de l'objet édité prenant la valeur du répertoire de contextualisation du contexte de plus haut niveau pour lequel l'attribut a été doté d'une valeur, chaque contexte héritant automatiquement des valeurs d'attribut associées au contexte de plus haut niveau auquel ledit contexte appartient.

2. Procédé selon la revendication 1, dans lequel, au cours de l'étape (450) d'attribution, on attribue à chaque attribut d'un objet de l'arborescence à afficher, la valeur de l'attribut de même nom, de même type et de même modificateur, de plus haut rang pour lequel il a été attribué une valeur dans un répertoire de contextualisation.

3. Procédé selon l'une des revendications 1 ou 2, dans lequel l'étape d'affichage comporte l'affichage :
- des objets présents dans le contexte,
- des attributs des dits objets,
- des valeurs des dits attributs,
- des modificateurs des valeurs des dits attributs : modificateurs d'animation par courbe définies par des clés d'animation ou une fonction mathématique, modificateurs de valeurs par expression et/ou modificateurs par texturage de l'attribut,
- si un répertoire de contextualisation existe dans ledit contexte, des valeurs d'attributs et des modificateurs définis dans un répertoire global du dit contexte et
- les valeurs d'attributs et des modificateurs définis dans chaque répertoire de contextualisation d'un contexte comportant ledit contexte.

4. Procédé selon l'une des revendications 1 à 3, dans lequel, au cours de l'étape (428) de formation de sous-contextes globaux, on forme un sous-contexte global dans chaque contexte, hormis les sous-contextes globaux.

5. Procédé selon l'une des revendications 1 à 4, dans lequel, au cours de l'étape (428) de formation de sous-contextes globaux, chaque sous-contexte global présente les propriétés de ne pouvoir ni être renommé, ni être supprimé.

6. Procédé selon l'une des revendications 1 à 5, dans lequel, au cours de l'étape (428) de formation de sous-contextes globaux, un contexte « global » reçoit des contextes directement ou sous forme de raccourci.

7. Procédé selon l'une des revendications 1 à 6, dans lequel :
- au cours de l'étape (405, 410) de formation d'une arborescence, on génère, pour le contexte racine, un sous-contexte dit « default » et
- au cours de l'étape (450) d'attribution, on affecte à chaque attribut de type objet à afficher qui référence un objet du contexte default, la valeur de l'objet du contexte default.

8. Procédé selon l'une des revendications 1 à 7, qui comporte une étape de création d'au moins un raccourci pointant vers un contexte, le contexte pointé par au moins un raccourci restant à sa position, l'étape (450) d'attribution de valeurs aux attributs des objets dudit contexte étant réalisée en mettant en œuvre chaque dit raccourci.

9. Procédé selon l'une des revendications 1 à 8, qui comporte une étape de création d'au moins un raccourci pointant vers un objet, l'objet pointé par au moins un raccourci restant à sa position, l'étape (450) d'attribution de valeurs aux attributs dudit objet étant réalisée en mettant en œuvre chaque dit raccourci.

10. Procédé selon l'une des revendications 1 à 9, dans lequel, au cours de l'étape (405, 410, 425) de formation d'une arborescence, lorsqu'aucun contexte courant n'est défini pour la création d'un contexte ou d'un objet, la génération d'un contexte ou d'un objet est effectuée dans le contexte racine et, lorsqu'un contexte courant est défini, la génération d'un contexte ou d'un objet est effectuée dans le contexte courant.

11. Procédé selon l'une des revendications 1 à 10, dans lequel, au cours de l'étape (405, 410) de formation de l'arborescence hiérarchique, on attribue, à chaque contexte et à chaque objet dans un contexte, un nom représentant au moins une partie de l'enchaînement successif des contextes qui le comportent, en partant du répertoire racine.

12. Procédé selon l'une des revendications 1 à 11, qui comporte :
- une étape (205) de sélection d'une pluralité d'objets,
- une étape (210) d'affichage automatique d'un seul champ d'édition d'attribut pour des attributs éditables de même nom, de même type et pouvant recevoir les mêmes modificateurs, d'au moins deux des objets sélectionnés et
- une étape (215) d'édition conjointe de la valeur d'attributs éditables de même nom, de même type et pouvant recevoir les mêmes modificateurs, pour au moins deux des objets sélectionnés.

13. Procédé selon l'une des revendications 1 à 12, qui comporte une étape de sélection d'un attribut à éditer commun à au moins deux des objets sélectionnés et une étape (220) de sélection d'un mode d'édition conjointe de la valeur de cet attribut commun d'au moins deux objets sélectionnés, dans lequel, pour un dit mode d'édition, au cours de l'étape d'édition (215), on affecte à tous les attributs des différents objets sélectionnés possédant cet attribut commun la valeur de l'attribut commun du dernier objet sélectionné.

14. Procédé selon la revendication 13, dans lequel, pour un dit mode d'édition, au cours de l'étape d'édition (215), on fait varier de la même valeur l'attribut sélectionné des différents objets sélectionnés qui possèdent cet attribut.

15. Procédé selon l'une des revendications 13 ou 14, dans lequel, pour un dit mode d'édition, au cours de l'étape d'édition (215), on affecte à la valeur de l'attribut commun, un objet non sélectionné.

## Patentansprüche

1. Organisationsverfahren eines Systems von mit Attributen versehenen Software-Objekten, das umfasst:
- einen Bildungsschritt (405, 410, 425, 440) eines hierarchischen Baums aus "Kontexte" genannten Objektgruppen, wobei der Baum einen Wurzelkontext umfasst, bei dem sich alle anderen Kontexte und alle Objekte befinden, wobei jedes Objekt des genannten Baums in einem genannten Kontext ist,
- einen Bildungsschritt (428) eines als "global" bezeichneten Unterkontextes für jeden aus einer Vielzahl von Kontexten zum Exponieren der Objekte ausgehend von einem Punkt des Kontextbaumes, wobei jeder globale Unterkontext zum Exponieren der Objekte global ausgehend einem Baumpunkt für den gesamten Unterbaum dient, wobei jedes Objekt, das in einen globalen Kontext platziert ist, für alle Objekte des Kontextes verfügbar gemacht ist, in dem sich der betrachtete "globale" Kontext, bezeichnet als "Vater"-Kontext, und alle Unterkontexte des Vaterkontextes befinden.
- einen Bildungsschritt (430) eines als "Kontextualisierung" bezeichneten Verzeichnisses von Attributwerten für die Objekte des genannten Kontextes für jeden der Vielzahl von Kontexten,
- einen Zuordnungsschritt (450) des Wertes des Attributs desselben Namens und desselben Typs des höchsten Rangs, für den ein Wert in einem Kontextualisierungsverzeichnis zugeordnet wurde, zu wenigstens einem Attribut eines anzuzeigenden Baumobjekts,
- einen Bestimmungsschritt von anzuzeigenden Objekten und
- einen Anzeigeschritt jedes anzuzeigenden Objekts mit seinen Attributen und den Werten seiner Attribute unter Berücksichtigung der Kontextualisierungsverzeichnisse, wenn ein Wert einem Attribut in einem Kontextualisierungsverzeichnis eines Kontextes oder eines Unterkontextes zugeordnet wurde, der das genannte Objekt enthält, wobei der Wert des kompatiblen Attributs des bearbeiteten Objekts den Wert des Kontextualisierungsverzeichnisses des höchsten Niveaus annimmt, für den das Attribut mit einem Wert versehen wurde, wobei jeder Kontext automatisch Attributwerte erbt, die dem Kontext des höchsten Niveaus zugeordnet sind, zu dem der genannte Kontext gehört.

2. Verfahren gemäß Anspruch 1, bei dem im Verlauf des Zuordnungsschritts (450) jedem Attribut eines Objekts des anzuzeigenden Baums der Wert des Attributs desselben Namens, desselben Typs und desselben Modifikators des höchsten Rangs, für den ein Wert in einem Kontextualisierungsverzeichnis zugeordnet wurde, zugeordnet wird.

3. Verfahren gemäß einem der Ansprüche 1 oder 2, bei dem der Anzeigeschritt die Anzeige umfasst:
- der in dem Kontext vorhandenen Objekte,
- Attribute der genannten Objekte,
- Werte der genannten Attribute,
- Modifikatoren der Werte der genannten Attribute: Animationsmodifikatoren per Kurve, die durch Animationsschlüssel oder eine mathematische Funktion definiert sind, Wertmodifikatoren per Expression und/oder Modifikatoren per Texturabbildung des Attributs,
- wenn ein Kontextualisierungsverzeichnis in dem genannten Kontext existiert, Attributwerte und Modifikatoren, die in einem globalen, als Kontext bezeichneten Verzeichnis definiert sind, und
- Attributwerte und Modifikatoren, die in jedem Kontextualisierungsverzeichnis eines den genannten Kontext umfassenden Kontextes definiert sind.

4. Verfahren gemäß einem der Ansprüche 1 bis 3, bei dem im Verlauf des Bildungsschritts (428) von globalen Unterkontexten ein globaler Unterkontext in jedem Kontext bis auf die globalen Unterkontexte gebildet werden.

5. Verfahren gemäß einem der Ansprüche 1 bis 4, bei dem im Verlauf des Bildungsschritts (428) von globalen Unterkontexten jeder globale Unterkontext die Eigenschaften aufweist, weder umbenannt noch gelöscht werden zu können.

6. Verfahren gemäß einem der Ansprüche 1 bis 5, bei dem im Verlauf des Bildungsschritts (428) von globalen Unterkontexten ein "globaler" Unterkontext Kontexte direkt oder in Form von Abkürzungen empfängt.

7. Verfahren gemäß einem der Ansprüche 1 bis 6, bei dem:
- im Verlauf des Bildungsschritts (405, 410) eines Baums für den Wurzelkontext ein als "Default" bezeichneter Unterkontext erzeugt wird und
- im Verlauf des Zuordnungsschritts (450) jedem Attribut vom anzuzeigenden Objekttyp, der ein Objekt des Default-Kontextes referenziert, der Wert des Objekts des Default-Kontextes zugeordnet wird.

8. Verfahren gemäß einem der Ansprüche 1 bis 7, das einen Schritt zum Anlegen wenigstens einer Abkürzung umfasst, die auf einen Kontext verweist, wobei der Kontext, auf den durch wenigstens eine Abkürzung verwiesen wird, in seiner Position verbleibt, wobei der Zuordnungsschritt (450) von Werten zu den Attributen der Objekte des genannten Kontextes realisiert ist, indem jede so genannte Abkürzung umgesetzt ist.

9. Verfahren gemäß einem der Ansprüche 1 bis 8, das einen Schritt zum Anlegen wenigstens einer Abkürzung umfasst, die auf ein Objekt verweist, wobei das Objekt, auf das durch wenigstens eine Abkürzung verwiesen wird, in seiner Position verbleibt, wobei der Zuordnungsschritt (450) von Werten zu den Attributen des genannten Objekts realisiert ist, indem jede so genannte Abkürzung umgesetzt ist.

10. Verfahren gemäß einem der Ansprüche 1 bis 9, bei dem im Verlauf des Bildungsschritts (405, 410, 425) eines Baums, das Erzeugen eines Kontextes oder eines Objekts im Wurzelkontext durchgeführt ist, wenn kein anderer aktueller Kontext zum Anlegen eines Kontextes oder eines Objekts definiert ist und das Erzeugen eines Kontextes oder eines Objekts im laufenden Kontext durchgeführt ist, wenn ein aktueller Kontext definiert ist.

11. Verfahren gemäß einem der Ansprüche 1 bis 10, bei dem im Verlauf des Bildungsverfahrens (405, 410) des hierarchischen Baums jedem Kontext und jedem Objekt in einem Kontext ein Name zugeordnet ist, der wenigstens einen Teil der sukzessiven Verkettung der Kontexte, die ihn umfassen, angefangen von dem Wurzelrepertoire, zugeordnet ist.

12. Verfahren gemäß einem der Ansprüche 1 bis 11, das umfasst:
- einen Auswahlschritt (205) einer Vielzahl von Objekten,
- einen automatischen Anzeigeschritt (210) eines einzigen Attribut-Bearbeitungsfeldes für bearbeitbare Attribute desselben Namens, desselben Typs und die dieselben Modifikatoren empfangen können, von wenigstens zwei der ausgewählten Objekte und
- einen gemeinsamen Bearbeitungsschritt (215) des Wertes für bearbeitbare Attribute desselben Namens, desselben Typs und die dieselben Modifikatoren empfangen können, für wenigstens zwei der ausgewählten Objekte.

13. Verfahren gemäß einem der Ansprüche 1 bis 12, das einen Auswahlschritt eines zu bearbeitenden gemeinsamen Attributs an wenigstens zwei der ausgewählten Objekte und einen Auswahlschritt (220) eines gemeinsamen Bearbeitungsmodus des Wertes dieses gemeinsamen Attributs von wenigstens zwei ausgewählten Objekten umfasst, bei dem für einen genannten Bearbeitungsmodus im Verlauf des Bearbeitungsschrittes (215) allen Attributen der unterschiedlichen ausgewählten Objekte, die dieses gemeinsame Attribut besitzen, der gemeinsame Attributwert des letzten ausgewählten Objekts zugeordnet wird.

14. Verfahren gemäß Anspruch 13, bei dem für einen so genannten Bearbeitungsmodus im Verlauf des Bearbeitungsverfahrens (215) derselbe ausgewählte Attributwert der unterschiedlichen ausgewählten Objekte, die dieses Attribut besitzen, abgewandelt wird.

15. Verfahren gemäß einem der Ansprüche 13 oder 14, bei dem für einen so genannten Bearbeitungsmodus im Verlauf des Bearbeitungsschritts (215) dem Wert des gemeinsamen Attributs ein nicht ausgewähltes Objekt zugeordnet wird.

## Claims

1. Method of organizing a system of software objects having attributes, which comprises:
- a step (405, 410, 425, 440) of forming a hierarchical tree of groups of objects called "contexts", the tree comprising a root context in which all the other contexts and all the objects are found, each object of said tree being in a so-called context;
- a step (428) of forming, for each of a plurality of contexts, a so-called "global" subcontext so as to expose objects from a point of the tree of contexts, each global subcontext serving to expose objects globally from a branching point to the entire subtree, each object that is placed in a global context being made available to all the objects of the context in which the "global" context in question, referred to as the "parent" context, and all the subcontexts of the parent context are found;
- a step (430) of forming, for each of a plurality of contexts, a so-called "contextualization" directory of values of attributes for the objects of said context;
- a step (450) of allocating, to at least one attribute of an object of the tree to be displayed, the value of the higher-rank attribute of the same name and the same type, to which a value has been allocated in a contextualization directory;
- a step of determining objects to be displayed; and
- a step of displaying each object to be displayed with its attributes and the values of its attributes, taking contextualization directories into account, when an attribute in a contextualization directory of a context or subcontext containing said object has been allocated a value, the value of the compatible attribute of the edited object taking the value of the contextualization directory of the higher level context for which the attribute has been given a value, each context automatically inheriting attribute values associated to the higher level context to which said context belongs.

2. Method according to claim 1, wherein, during the allocation step (450), each attribute of an object of the tree to be displayed is allocated the value of the higher-rank attribute of the same name, of the same type and with the same modifier, to which a value has been allocated in a contextualization directory.

3. Method according to one of claims 1 or 2 wherein the display step comprises displaying:
- objects present in the context;
- attributes of said objects;
- values of said attributes;
- modifiers of the values of said attributes: animation curve modifiers defined by animation keys or a mathematical function, expression modifiers of values and/or mapping modifiers of the attribute;
- if a contextualization directory exists in said context, values of attributes and modifiers defined in a global directory of said context; and
- the values of attributes and modifiers defined in each contextualization directory of a context comprising said context.

4. Method according to one of claims 1 to 3 wherein, during the global subcontexts formation step (428), a global subcontext is formed in each context, except for the global subcontexts.

5. Method according to one of claims 1 to 4 wherein, during the global subcontexts formation step (428), each global subcontext has the properties of being able neither to be renamed nor deleted.

6. Method according to one of claims 1 to 5 wherein, during the global subcontexts formation step (428), a "global" context receives contexts directly or in the form of shortcuts.

7. Method according to one of claims 1 to 6 wherein:
- during the tree formation step (405, 410), a subcontext, referred to as "default", is generated for the root context; and
- during the allocation step (450), each object type of attribute to be displayed that references an object of the default context is allocated the value of the object of the default context.

8. Method according to one of claims 1 to 7, which comprises a step of creating at least one shortcut pointing to a context, the context pointed to by at least one shortcut remaining in its position, the step (450) of allocating values to the attributes of the objects of said context being performed by utilizing each said shortcut.

9. Method according to one of claims 1 to 8, which comprises a step of creating at least one shortcut pointing to an object, the object pointed to by at least one shortcut remaining in its position, the step (450) of allocating values to the attributes of said object being performed by utilizing each said shortcut.

10. Method according to one of claims 1 to 9 wherein, during the tree formation step (405, 410, 425), when no current context is defined for creating a context or an object, a context or an object is generated in the root context and, when a current context is defined, a context or an object is generated in the current context.

11. Method according to one of claims 1 to 10 wherein, during the hierarchical tree formation step (405, 410), each context and each object in a context is allocated a name representing at least one part of the successive chaining of the contexts that comprise it, starting from the root directory.

12. Method according to one of claims 1 to 11, which comprises:
- a step (205) of selecting a plurality of objects;
- a step (210) of automatically displaying a single attribute edit field for editable attributes of at least two of the objects selected having the same name, the same type, and able to receive the same modifiers; and
- a step (215) of jointly editing the value of editable attributes of at least two of the objects selected having the same name, the same type, and able to receive the same modifiers.

13. Method according to one of claims 1 to 12, which comprises a step of selecting an attribute to be edited that is shared by at least two of the objects selected, and a step (220) of selecting a mode of jointly editing the value of this attribute shared by at least two selected objects, wherein, for one said editing mode, during the editing step (215), all the attributes of the various objects selected having this shared attribute are allocated the value of the shared attribute of the last object selected.

14. Method according to claim 13, wherein, for one said editing mode, during the editing step (215), the selected attribute of the various selected objects that have this attribute is altered by the same value.

15. Method according to one of claims 13 or 14, wherein, for one said editing mode, during the editing step (215), an object not selected is allocated the value of the shared attribute.
